# EUROPEAN PATENT SPECIFICATION

(11) **EP 3 046 003 B1**
(45) Date of publication and mention of the grant of the patent: **04.07.2018**
(21) Application number: 14844164.5
(22) Date of filing: 15.04.2014
(51) Int. Cl.: G06F 1/32, G09G 3/36, G09G 5/10

(54) **SCREEN BRIGHTNESS REGULATION METHOD AND APPARATUS, AND STORAGE MEDIUM**
HELLIGKEITSREGELUNGSVERFAHREN UND -VORRICHTUNG FÜR EINEN BILDSCHIRM UND SPEICHERMEDIUM
PROCÉDÉ ET APPAREIL DE RÉGULATION DE LA LUMINOSITÉ D'UN ÉCRAN, ET SUPPORT D'INFORMATIONS

(30) Priority: 11.09.2013 CN 201310413193
(43) Date of publication of application: 20.07.2016
(73) Proprietor: ZTE Corporation, Shenzhen, Guangdong 518057 (CN)
(72) Inventor: YANG, Guoping, Shenzhen Guangdong 518057 (CN); HU, Bo, Shenzhen Guangdong 518057 (CN)
(74) Representative: Lavoix
(86) International application number: PCT/CN2014/075389
(87) International publication number: WO 2015/035773

(56) References cited:
- EP-A2- 1 107 221
- CN-A- 101 287 037
- CN-A- 101 848 281
- CN-A- 102 193 615
- CN-A- 102 523 344
- CN-A- 103 024 179
- US-A1- 2005 240 786
- US-A1- 2008 238 837
- US-A1- 2011 080 422

## Description

### TECHNICAL FIELD

The disclosure relates to display technology and, in particular, to a method and apparatus for adjusting screen brightness, and a storage medium.

### BACKGROUND

With the continuous development and progress of science and technology, the functions of a terminal are more and more, including such as a photographing function, a handwriting function, a music playing function, a video call function and a terminal television function. The terminal is developed from a common terminal to a smart terminal. However, the more the functions of the terminal are, the more the power is consumed. Thus, how to prolong the standby time of the terminal becomes a technical problem to be solved to facilitate the rapid development of the terminal.

With the increasingly complicated and powerful functions, more and more terminals with large screens emerge. However, the larger the screen of the terminal is, the higher the power consumption is. A common terminal uses a Light Emitting Diode (LED) screen or a Liquid Crystal Display (LCD) screen. When the terminal is operated, the liquid crystal screen will be lighted, and the backlight of the liquid crystal screen will be triggered. Thus, the power of a battery will be consumed after the screen is lighted for a long time. Particularly, in case of low power of the battery, if the whole screen is still lighted, the power consumption of the battery will be accelerated.

There are many modes of saving the power of the terminal currently, such as, by using power-saving materials, by running programs on the background, and by differentiating the daytime and night. In addition, there is also a method for saving the power with respect to part of display areas. Although these methods can achieve the power saving, users participate too much, and the effect of power saving is not obvious enough.

The document US 2011/0080422A1 discloses an apparatus, comprising a battery, a display, and logic coupled to the battery and display. The logic is configured to determine an amount of remaining energy in the battery, and a current power consumption rate of the apparatus. The logic determines whether the amount of remaining energy is sufficient to operate the apparatus for the duration of the predetermined time period based on the current power consumption rate of the apparatus. The logic is configured to adjust the brightness of the display to enable the device to operate for the duration of the predetermined time period responsive to determining the amount of remaining energy in the battery is insufficient to operate the apparatus for the duration of the predetermined time period based on the current power consumption of the apparatus.

### SUMMARY

The embodiments of the disclosure are intended to provide a method and apparatus for adjusting screen brightness, and a storage medium, which can save the power of a terminal. Embodiments which do not fall within the scope of the claims do not describe part of the present invention. According to one aspect of the disclosure, a method for adjusting screen brightness is provided, which includes that:
a current battery power value and a current screen brightness value of a terminal are acquired;
a target screen brightness range suitable for the acquired current battery power value is selected by taking the current screen brightness value as a baseline; and
a screen brightness value corresponding to the current battery power value is selected according to power consumption values corresponding to at least two selected screen brightness values in the target screen brightness range, and display is performed according to the selected screen brightness value;
the method may further include that:
   a minimum screen brightness value and a maximum screen brightness value of the terminal are acquired; and
   at least two screen brightness values are selected at equal intervals incrementally or degressively in a range from the acquired minimum screen brightness value to the acquired maximum screen brightness value of the terminal, and a plurality of power consumption values corresponding to the at least two screen brightness values are calculated respectively;
the step that the screen brightness value corresponding to the current battery power value is selected according to the power consumption values corresponding to at least two selected screen brightness values in the target screen brightness range and display is performed according to the selected screen brightness value may include that:
   power consumption values corresponding to at least two screen brightness values selected in the target screen brightness range are acquired, and power consumption difference values between the power consumption values corresponding to every two adjacent screen brightness values are calculated;
   a first list is established according to the at least two screen brightness values in the target screen brightness range and the corresponding power consumption difference values; and
   a screen brightness value corresponding to a minimum power consumption difference value is selected from the first list, and the screen brightness is used for display according to the selected screen brightness value.

According to one aspect of the disclosure, a method for adjusting screen brightness is provided, which includes that:
a current battery power value and a current screen brightness value of a terminal are acquired;
a target screen brightness range suitable for the acquired current battery power value is selected by taking the current screen brightness value as a baseline; and
a screen brightness value corresponding to the current battery power value is selected according to power consumption values corresponding to at least two selected screen brightness values in the target screen brightness range, and display is performed according to the selected screen brightness value;
the method may further include that:
   a minimum screen brightness value and a maximum screen brightness value of the terminal are acquired; and
   at least two screen brightness values are selected at equal intervals incrementally or degressively in a range from the acquired minimum screen brightness value to the acquired maximum screen brightness value of the terminal, and a plurality of power consumption values corresponding to the at least two screen brightness values are calculated respectively;
the step that the screen brightness value corresponding to the current battery power value is selected according to the power consumption values corresponding to at least two selected screen brightness values in the target screen brightness range and display is performed according to the selected screen brightness value may include that:
   a first curve graph is established according to the selected screen brightness values and the power consumption values corresponding to the screen brightness values;
   the established first curve graph is converted into at least two function straight lines; and
   a straight line with a minimum slope is found, a screen brightness with the smallest difference from the current screen brightness value is selected on the straight line with the minimum slope, and display is performed according to the selected screen brightness value.

Preferably, the step that the target screen brightness range suitable for the acquired current battery power value is selected by taking the current screen brightness value as the baseline may include that:
when the acquired current battery power value is not lower than a set threshold value, a brightness range higher than the current screen brightness value is selected as the target screen brightness range; and
when the acquired current battery power value is lower than the set threshold value, a brightness range lower than the current screen brightness value is selected as the target screen brightness range.

According to another aspect of the disclosure, an apparatus for adjusting screen brightness is provided, which includes:
an acquisition module, configured to acquire a current battery power value and a current screen brightness value of a terminal;
a screen brightness range selection module, configured to select a target screen brightness range suitable for the acquired current battery power value by taking the current screen brightness value as a baseline; and
a screen brightness value determination module, configured to select a screen brightness value corresponding to the current battery power value according to power consumption values corresponding to at least two selected screen brightness values in the target screen brightness range, and display according to the selected screen brightness value;
the apparatus may further include:
   a screen brightness value and power consumption value acquisition module, configured to acquire a minimum screen brightness value and a maximum screen brightness value of the terminal, select at least two screen brightness values at equal intervals incrementally or degressively in a range from the acquired minimum screen brightness value to the acquired maximum screen brightness value of the terminal, and calculate power consumption values corresponding to the at least two screen brightness values;
   the screen brightness value determination module may include:
      an power consumption difference value calculation sub-module, configured to select at least two screen brightness values in the target screen brightness range, acquire power consumption values corresponding to at least two selected screen brightness values, and calculate an power consumption difference value between the power consumption values corresponding to every two adjacent screen brightness values;
      a first list establishment sub-module, configured to establish and save a first list according to the at least two screen brightness values in the target screen brightness range and the corresponding power consumption difference values; and
      a determination sub-module, configured to select a screen brightness value corresponding to a minimum power consumption difference value from the first list, and display according to the selected screen brightness value.

According to another aspect of the disclosure, an apparatus for adjusting screen brightness is provided, which includes:
an acquisition module, configured to acquire a current battery power value and a current screen brightness value of a terminal;
a screen brightness range selection module, configured to select a target screen brightness range suitable for the acquired current battery power value by taking the current screen brightness value as a baseline; and
a screen brightness value determination module, configured to select a screen brightness value corresponding to the current battery power value according to power consumption values corresponding to at least two selected screen brightness values in the target screen brightness range, and display according to the selected screen brightness value;
the apparatus may further include:
   a screen brightness value and power consumption value acquisition module, configured to acquire a minimum screen brightness value and a maximum screen brightness value of the terminal, select at least two screen brightness values at equal intervals incrementally or degressively in a range from the acquired minimum screen brightness value to the acquired maximum screen brightness value of the terminal, and calculate power consumption values corresponding to the at least two screen brightness values;
   the screen brightness value determination module may further include:
      a first curve graph establishment sub-module, configured to select at least two screen brightness values in the target screen range, acquire power consumption values corresponding to at least two selected screen brightness values, and establish a first curve graph;
      a conversion sub-module, configured to convert the established first curve graph into at least two function straight lines; and
      a determination sub-module, configured to find a straight line with a minimum slope, select a screen brightness value with the smallest difference from the screen brightness value on the straight line with the minimum slope, and display according to the selected screen brightness value.

Preferably, the screen brightness range selection module may be further configured to select a brightness range higher than the current screen brightness value as the target screen brightness range when the acquired current battery power value is not lower than a set threshold value, and select a brightness range lower than the current screen brightness value as the target screen brightness range when the acquired current battery power value is lower than the set threshold value.

An embodiment of the disclosure also discloses a computer storage medium having computer executable instructions stored therein. The computer executable instructions are used for executing the above-mentioned method for adjusting screen brightness.

The embodiments of the disclosure provide the method and apparatus for adjusting screen brightness, and the storage medium. The method includes that: the current battery power value and the current screen brightness value of the terminal are acquired; the target screen brightness range suitable for the acquired current battery power value is selected by taking the current screen brightness value as the baseline; and the screen brightness value corresponding to the current battery power value is selected according to power consumption values corresponding to all selected brightness values in the target screen brightness range, and the screen brightness is used for displaying according to the selected screen brightness value. By means of the technical solutions in the embodiments of the disclosure, a brightness range is selected in real time according to current battery power, a point with a minimum differential value on the first curve graph is selected in the brightness range as the screen brightness value, so as to achieve power saving.

### BRIEF DESCRIPTION OF THE DRAWINGS

Fig. 1 is a flowchart showing a method for adjusting screen brightness according to an embodiment of the disclosure;
Fig. 2 is a diagram illustrating an apparatus for adjusting screen brightness according to an embodiment of the disclosure;
Fig. 3 is a flowchart showing implementation for scanning optimum power saving according to an embodiment of the disclosure;
Fig. 4 is a curve graph of screen brightness-power consumption according to an embodiment of the disclosure;
Fig. 5 is a flowchart showing a method for adjusting screen brightness implemented by a look-up table method according to an embodiment of the disclosure; and
Fig. 6 is a flowchart showing a method for adjusting screen brightness implemented by a function method according to an embodiment of the disclosure.

### DETAILED DESCRIPTION

The preferred embodiments of the disclosure are described below with reference to the drawings in detail. It should be understood that the preferred embodiments described below are only intended to describe and explain the disclosure, and are not intended to limit the disclosure.

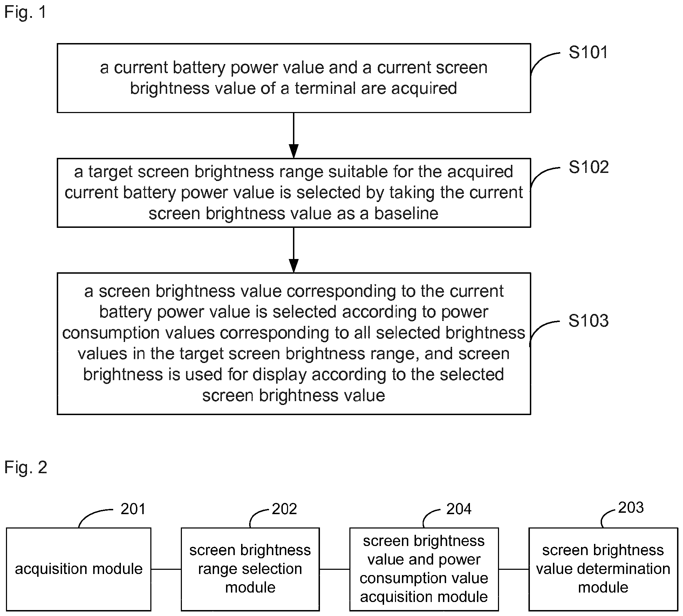

Fig. 1 is a flowchart showing a method for adjusting screen brightness according to an embodiment of the disclosure. As shown in Fig. 1, the method includes the steps as follows.

At Step S101, a current battery power value and a current screen brightness value of a terminal are acquired.

At Step S102, a target screen brightness range suitable for the acquired current battery power value is selected by taking the current screen brightness value as a baseline.

Here, when the acquired current battery power value is not lower than a set threshold value, a brightness range higher than the current screen brightness value is selected as the target screen brightness range. When the acquired current battery power value is lower than the set threshold value, a brightness range lower than the current screen brightness value is selected as the target screen brightness range.

At Step S103, a screen brightness value corresponding to the current battery power value is selected according to power consumption values corresponding to all selected brightness values in the target screen brightness range, and screen brightness is used for display according to the selected screen brightness value.

In the embodiment of the disclosure, the method further includes that: a minimum screen brightness value and a maximum screen brightness value of the terminal are acquired; and at least two screen brightness values are selected at equal intervals incrementally or degressively in a range from the acquired minimum screen brightness value to the acquired maximum screen brightness value of the terminal, and power consumption values corresponding to the at least two screen brightness values are calculated respectively.

Herein, the step that the screen brightness value corresponding to the current battery power value is selected according to the power consumption values corresponding to all the selected brightness values in the target screen brightness range and the screen brightness is used for displaying according to the selected screen brightness value includes that: at least two screen brightness values are selected in the target screen brightness range, power consumption values corresponding to all selected screen brightness values are acquired, and power consumption difference values between the power consumption values corresponding to every two adjacent screen brightness values is calculated; a first list namely a screen brightness value-power consumption difference value table is established and saved according to the at least two screen brightness values in the target screen brightness range and the corresponding power consumption difference values; and a screen brightness value corresponding to a minimum power consumption difference value is selected in the screen brightness value-power consumption difference value table, and the screen brightness is used for displaying according to the screen brightness value.

Herein, the step that the screen brightness value corresponding to the current battery power value is selected according to the power consumption values corresponding to all the selected brightness values in the target screen brightness range and the screen brightness is used for displaying according to the selected screen brightness value further includes that: at least two screen brightness values are selected in the target screen brightness range, power consumption values corresponding to all selected screen brightness values are acquired, and a first curve graph namely a screen brightness value-power consumption value curve graph is established; the established screen brightness value-power consumption value curve graph is converted into at least two function straight lines; and a straight line with a minimum slope is found, a screen brightness value with the smallest difference from the screen brightness value is selected on the straight line with the minimum slope, and the screen brightness is used for displaying according to the selected screen brightness value.

Fig. 2 is a diagram illustrating an apparatus for adjusting screen brightness according to an embodiment of the disclosure. As shown in Fig. 2, the apparatus includes: an acquisition module 201, a screen brightness range selection module 202 and a screen brightness value determination module 203.

The acquisition module 201 is configured to acquire a current battery power value and a current screen brightness value of a terminal. The screen brightness range selection module 202 is configured to select a target screen brightness range suitable for the acquired current battery power value by taking the current screen brightness value as a baseline.

The screen brightness value determination module 203 is configured to select a screen brightness value corresponding to the current battery power value according to power consumption values corresponding to all selected brightness values in the target screen brightness range, and display with screen brightness according to the selected screen brightness value.

In the embodiment of the disclosure, the apparatus further includes:
a screen brightness value and power consumption value acquisition module 204, configured to acquire a minimum screen brightness value and a maximum screen brightness value of the terminal, select at least two screen brightness values at equal intervals incrementally or degressively in a range from the acquired minimum screen brightness value to the acquired maximum screen brightness value of the terminal, and calculate power consumption values corresponding to the at least two screen brightness values.

Preferably, the screen brightness range selection module 202 is further configured to select a brightness range higher than the current screen brightness value as the target screen brightness range when the acquired current battery power value is not lower than a set threshold value, and select a brightness range lower than the current screen brightness value as the target screen brightness range when the acquired current battery power value is lower than the set threshold value.

Preferably, the screen brightness value determination module 203 includes:
a power consumption difference value calculation sub-module, configured to select at least two screen brightness values in the target screen brightness range, acquire power consumption values corresponding to all selected brightness values, and calculate power consumption difference values between the power consumption values corresponding to every two adjacent screen brightness values;
a first list establishment sub-module, configured to establish and save a first list namely a screen brightness value-power consumption difference value table according to the at least two screen brightness values in the target screen brightness range and the corresponding power consumption difference values; and
a determination sub-module, configured to select a screen brightness value corresponding to a minimum power consumption difference value from the screen brightness value-power consumption difference value table, and display with the screen brightness according to the selected screen brightness value.

Preferably, the screen brightness value determination module 203 further includes:
a first curve graph establishment sub-module, configured to select at least two screen brightness values in the target screen range, acquire power consumption values corresponding to all selected brightness values, and establish a first curve graph namely a curve graph of screen brightness value-power consumption value;
a conversion sub-module, configured to convert the established curve graph of screen brightness value-power consumption value into at least two function straight lines; and
a determination sub-module, configured to find a straight line with a minimum slope, select a screen brightness value with the smallest difference from the screen brightness value on the straight line with the minimum slope, and display with the screen brightness according to the selected screen brightness value.

In practice, the acquisition module 201, the screen brightness range selection module 202, the screen brightness value determination module 203 and the screen brightness value and power consumption value acquisition module 204 can be realized by a Central Processing Unit (CPU), a Digital Signal Processor (DSP), a Micro-Processor Unit (MPU), a Field-Programmable Gate Array (FPGA) or the like. The CPU, the DSP, the MPU and the FPGA can be arranged in a terminal such as a mobile terminal.

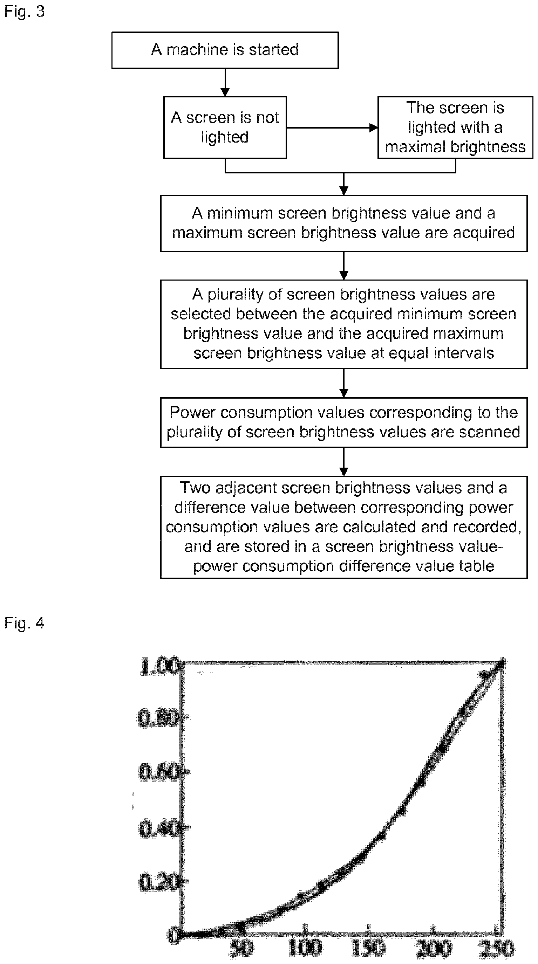

Fig. 3 is a flowchart showing implementation for scanning optimum power saving according to an embodiment of the disclosure. As shown in Fig. 3, an android operating system of a terminal is taken an example, and other operating systems of other terminals are similar to the android operating system of the terminal.

After logging in the system of the terminal, a user can directly use a terminal if the terminal can provide a curve graph of screen brightness value-power consumption value (which may be provided by some manufacturers). If the curve graph of screen brightness value-power consumption value is not provided, a minimum screen brightness value (in case that a screen is not lighted) and a maximum screen brightness value (maximum brightness supported by the terminal) are set, and then multiple (100 or 1000) screen brightness values are selected at equal intervals between the maximum screen brightness value and the minimum screen brightness value in a mode that the brightness evenly and progressively increases and decreases. The power consumption situation corresponding to each of screen brightness values is scanned in sequence from no lighting of the screen to maximum lighting of the screen, and each of the screen brightness values and a corresponding power consumption value are recorded. As shown in Fig. 4, a screen brightness value range (a horizontal axis in Fig. 4 is a brightness value range) of an LCD is [0-255], where 0 and 255 correspond to the minimum screen brightness value and the maximum screen brightness value respectively (a longitudinal axis in Fig. 4 is a screen brightness value range). Power consumption values of the system corresponding to 256 brightness levels will be tested for each type of mobile terminals, and a screen brightness value-power consumption value table is established and saved.

An application module implementing the above-mentioned functions can be specifically named a Lowest Power Light (LPL).

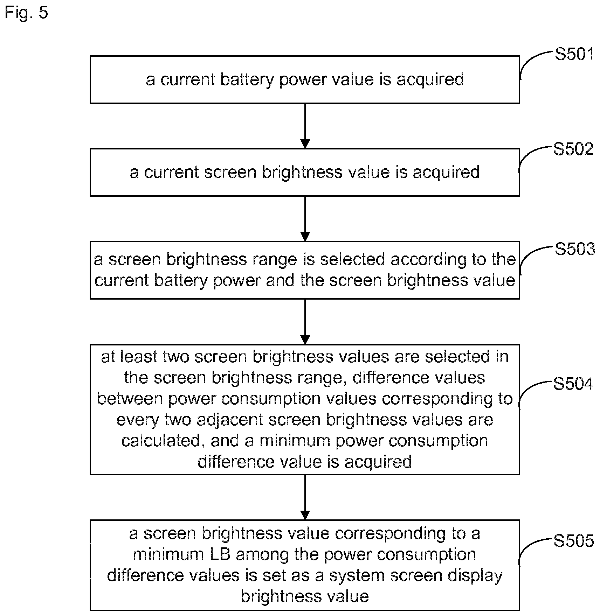

Fig. 5 is a flowchart showing a method for adjusting screen brightness implemented by a look-up table method according to an embodiment of the disclosure. As shown in Fig. 5, the method includes the steps as follows.

At Step S501, a current battery power value is acquired via a system power acquiring interface.

In the android operating system, the current battery power value can be acquired by registering and receiving a power change broadcast message.

At Step S502, a current screen brightness value is acquired via a relevant interface of a photo-sensor of the system.

In the android operating system, a current automatic photosensitive screen brightness value can be acquired from a photosensitive drive program.

At Step S503, a screen brightness range is selected according to the current battery power value and the current screen brightness value.

At Step S504, at least two screen brightness values are selected in the screen brightness range, difference values between power consumption values corresponding to every two adjacent screen brightness values are calculated, and a minimum power consumption difference value is acquired.

The minimum screen brightness value corresponding to no lighting of the screen of a mobile device and the maximum screen brightness value corresponding to maximum brightness are acquired. The brightness values between the minimum screen brightness value and the maximum screen brightness value are divided into, for example, 100 or 1000 parts at equal intervals. The power consumption situation corresponding to each of the screen brightness values is scanned in sequence from no lighting of the screen to maximum lighting of the screen (via current change), and the difference values between the power consumption values corresponding to every two adjacent screen brightness values are recorded as, for example, LB. As shown in Table 1, the terminal establishes a screen brightness value-power consumption difference value table used for storing multiple (100 or 1000) screen brightness values and the corresponding power consumption difference values LB (for example, if the power consumption is 0.25ma when the screen brightness value is 40 and the power consumption is 0.27ma when the brightness value is 41, an LB value is 0.27-0.25=0.02ma and is recorded as 41-0.02).

**Table 1: screen brightness value-power consumption difference value table**

| Screen brightness value | Power consumption difference value LB |
|---|---|
| ... | ... |
| ... | ... |
| ... | ... |
| 550 | 0.92 |
| 551 | 0.83 |
| 552 | 0.82 |
| 553 | 1.12 |
| 554 | 1.06 |
| 555 | 1.02 |
| 556 | 0.99 |
| 557 | 1.05 |
| 558 | 1.02 |
| 559 | 1.12 |
| 560 | 1.08 |
| 561 | 1.01 |
| ... | ... |
| ... | ... |
| ... | ... |

At Step S505, a screen brightness value corresponding to a minimum LB among the power consumption difference values is set as a system screen display brightness value.

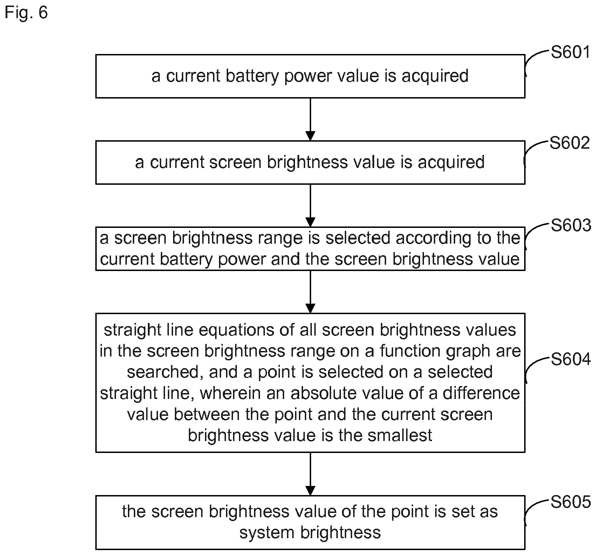

Fig. 6 is a flowchart showing a method for adjusting screen brightness implemented by a function method according to an embodiment of the disclosure. As shown in Fig. 6, the method includes the steps as follows.

At Step S601, a current battery power value is acquired via a system power acquiring interface.

In the android operating system, battery power can be acquired by registering and receiving a power change broadcast message.

At Step S602, a current screen brightness value is acquired via a relevant interface of a photo-sensor of the system.

In the android operating system, a current automatic photosensitive screen brightness value can be acquired from a photosensitive drive program.

At Step S603, a screen brightness range is selected according to the current battery power value and the current screen brightness value.

At Step S604, a curve graph of screen brightness value-power consumption value is established according to power consumption values corresponding to all selected screen brightness values in the screen brightness range; the established curve graph of screen brightness value-power consumption value is converted into at least two function straight lines; and affiliated straight line equations of all screen brightness values in the screen brightness range on a function graph are searched, and then selection is performed by following a principle of selecting a straight line equation with a minimum slope k value among all the straight line equations, selecting a straight line, and selecting a point on the straight line, wherein an absolute value of a difference value between the point and the current screen brightness value is minimum.

The minimum screen brightness value corresponding to no lighting of the screen of the mobile device and the maximum screen brightness value corresponding to maximum brightness are acquired. The brightness values between the minimum screen brightness value and the maximum screen brightness value are divided into, for example, 100 or 1000 parts at equal intervals. The power consumption situation corresponding to each of the screen brightness values is scanned in sequence from no lighting of the screen to maximum lighting of the screen (via current change), each of the screen brightness values and the corresponding power consumption value are recorded once, and a curve graph of screen brightness value-power consumption value is established and saved. A screen brightness value-power consumption value between two points is expressed by using a straight line expression, functions corresponding to all points are expressed by connecting multiple segments of straight lines which are short enough, and a function (a segmented function, each segment being a straight line) about the screen brightness value-power consumption value of the terminal is derived.

In view of some actually-acquired data, the screen brightness value-power consumption value of the LCD is not linear but curved. However, in view of differential, the curve is actually composed of multiple segments of straight lines which are short enough. It is supposed that the straight line function is Y=kx+b, where Y is a voltage, x is a screen brightness value, b is a compensation coefficient and k is a slope. The slope k and the compensation coefficient b are different for different types of LCDs and even in different brightness ranges which are divided into, for example, 100, 1000 or more ranges according to the fine granularity of brightness. Thus, each small-enough range can be regarded as a straight line of which the slope is k, and the corresponding compensation coefficient is adjusted for each small-enough range.

A relevant formula is derived via data to acquire a straight line equation in each of the screen brightness ranges.

The screen brightness value set for the system screen is described below with reference to a specific embodiment. It is assumed that several following groups of data are acquired with a format of the screen brightness value-power consumption value, and a maximum error is set as 0.05.
1-3.1 2-5.2 3-7.32 4-9.48 5-11.6

A straight line can be determined by two points, and an equation (y=2.1x+1) can be acquired by 1-3.1 and 2-5.2.

For 3-7.32, x=3 is substituted into the above-mentioned equation to acquire y (y=7.3), and an error between 7.3 and 7.32 is 0.02, which is smaller than 0.05, in an acceptable range.

For 4-9.48, x=4 is substituted into the above-mentioned equation to acquire y (y=9.4), and an error between 9.4 and 9.48 is 0.08, which is greater than 0.05, so it is determined that the point 4-9.48 is not on the straight line. A next calculation method is similar to the above-mentioned calculation method, and a new straight line equation is constituted by using 4-9.48 and 5-11.6.

After the relationship between screen brightness values and power consumption values (current) is determined, a freely moving screen brightness range will be selected according to the current battery power. For example, in the case that the battery power is lower than a set threshold value, the screen brightness range moves to a low range on the premise that a current automatic brightness value is in the moving range. If the current screen brightness value is set as x, the screen brightness range can be set as [x-6, x]. When the battery power is not lower than the threshold value, the screen brightness range moves to a high range. If the current screen brightness value is set as x, the screen brightness range can be set as [x, x+5]. It is judged which straight line equations are included by all screen brightness values in the screen brightness range on the function graph, and then selection is performed by following a principle of selecting a straight line equation with a minimum slope k value among all the straight line equations, selecting a straight line, and selecting a point on the straight line, wherein an absolute value of a difference value between the point and the current screen brightness value is minimum. Herein, the threshold value can be flexibly set according to a practical application situation.

An example is taken below. For example, a current screen brightness value is 100 and the current battery power is as high as 86%. A screen brightness range is set as [100, 105]. According to a previous function generation process, it is assumed that there are three straight lines between 100 and 105, for example:
the points of which screen brightness values range from 98 to 101 are located on a straight line y=1.58x+0.8,
the points of which screen brightness values are 102 and 103 are located on a straight line y=1.52x+1.2, and
the points of which screen brightness values range from 104 to 108 are located on a straight line y=1.6x-2.1.

Thus, the straight line slope of the straight line where the two points 102 and 103 are located is the smallest.

Due to the fact that a difference value between 102 and 100 is smaller than a difference value between 103 and 100 in the two points 102 and 103, the screen brightness value of the system screen at this time will be set as 102.

At Step S605, the screen brightness value of the point is set as system brightness.

An embodiment of the disclosure also provides a computer storage medium having computer executable instructions stored therein. The computer executable instructions are used for executing the above-mentioned method for adjusting screen brightness.

To sum up, the embodiments of the disclosure provide the method and apparatus for adjusting screen brightness, and the storage medium. The method includes that: the current battery power value and the current screen brightness value of the terminal are acquired; the target screen brightness range suitable for the acquired current battery power value is selected by taking the current screen brightness value as the baseline; and the screen brightness value corresponding to the current battery power value is selected according to power consumption values corresponding to all selected brightness values in the target screen brightness range, and the screen brightness is used for displaying according to the selected screen brightness value. By means of the technical solutions in the embodiments of the disclosure, a screen display brightness value can be adjusted via the current battery power of the terminal, thereby achieving the power saving and improving user experience.

Those skilled in the art should understand that the embodiments of the disclosure can provide a method, a system or a computer program product. Thus, the hardware, the software or the combination thereof can be adopted in the disclosure. Moreover, a form of the computer program product implemented on one or more computer available storage media (including, but not limited to, a disk memory, an optical memory or the like) containing computer available program codes can be adopted in the disclosure.

The disclosure is described with reference to flowcharts and/or block diagrams of the method, the device (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of causing the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide the steps of realizing the functions assigned in one or more flows of the flowcharts and/or one or more blocks of the block diagrams.

Although the disclosure is described in detail, the disclosure is not limited thereto. Those skilled in the art can make modifications according to the principle of the disclosure. Thus, various modifications as defined by the appended claims should be interpreted as falling within the protection scope of the disclosure.

## Claims

1. A method for adjusting screen brightness, comprising:
acquiring (S101) a current battery power value and a current screen brightness value of a terminal;
selecting (S102) a target screen brightness range suitable for the acquired current battery power value by taking the current screen brightness value as a baseline; and
selecting (S103) a screen brightness value corresponding to the current battery power value according to power consumption values corresponding to at least two selected screen brightness values in the target screen brightness range, and displaying according to the selected screen brightness value;
**characterized in that**, further comprising:
acquiring a minimum screen brightness value and a maximum screen brightness value of the terminal; and
selecting the at least two screen brightness values at equal intervals incrementally or degressively in a range from the acquired minimum screen brightness value to the acquired maximum screen brightness value of the terminal, and calculating power consumption values corresponding to the at least two screen brightness values respectively;
wherein the step of selecting the screen brightness value corresponding to the current battery power value according to the power consumption values corresponding to the at least two selected screen brightness values in the target screen brightness range and displaying according to the selected screen brightness value comprises:
acquiring power consumption values corresponding to the at least two screen brightness values selected in the target screen brightness range, and calculating power consumption difference values between the power consumption values corresponding to every two adjacent screen brightness values;
establishing a first list according to the at least two screen brightness values in the target screen brightness range and the corresponding power consumption difference values; and
selecting a screen brightness value corresponding to a minimum power consumption difference value from the first list, and displaying according to the selected screen brightness value.

2. A method for adjusting screen brightness, comprising:
acquiring (S101) a current battery power value and a current screen brightness value of a terminal;
selecting (S102) a target screen brightness range suitable for the acquired current battery power value by taking the current screen brightness value as a baseline; and
selecting (S103) a screen brightness value corresponding to the current battery power value according to power consumption values corresponding to at least two selected screen brightness values in the target screen brightness range, and displaying according to the selected screen brightness value;
**characterized in that**, further comprising:
acquiring a minimum screen brightness value and a maximum screen brightness value of the terminal; and
selecting the at least two screen brightness values at equal intervals incrementally or degressively in a range from the acquired minimum screen brightness value to the acquired maximum screen brightness value of the terminal, and calculating power consumption values corresponding to the at least two screen brightness values respectively;
wherein the step of selecting the screen brightness value corresponding to the current battery power value according to the power consumption values corresponding to the at least two selected screen brightness values in the target screen brightness range and displaying according to the selected screen brightness value comprises:
establishing a first curve graph according to the selected screen brightness values and the power consumption values corresponding to the screen brightness values;
converting the established first curve graph into at least two function straight lines; and
finding a straight line with a minimum slope, selecting a screen brightness value with the smallest difference from the current screen brightness value on the straight line with the minimum slope, and displaying according to the selected screen brightness value.

3. The method of claim 1, wherein the step of selecting the target screen brightness range suitable for the acquired current battery power value by taking the current screen brightness value as the baseline comprises:
selecting a brightness range higher than the current screen brightness value as the target screen brightness range when the acquired current battery power value is not lower than a set threshold value; and
selecting a brightness range lower than the current screen brightness value as the target screen brightness range when the acquired current battery power value is lower than the set threshold value.

4. An apparatus for adjusting screen brightness, comprising:
an acquisition module (201) configured to acquire a current battery power value and a current screen brightness value of a terminal;
a screen brightness range selection module (202) configured to select a target screen brightness range suitable for the acquired current battery power value by taking the current screen brightness value as a baseline; and
a screen brightness value determination module(203) configured to select a screen brightness value corresponding to the current battery power value according to power consumption values corresponding to at least two selected screen brightness values in the target screen brightness range, and display according to the selected screen brightness value;
**characterized in that**, further comprising:
a screen brightness value and power consumption value acquisition module (204) configured to acquire a minimum screen brightness value and a maximum screen brightness value of the terminal, select the at least two screen brightness values at equal intervals incrementally or degressively in a range from the acquired minimum screen brightness value to the acquired maximum screen brightness value of the terminal, and calculate power consumption values corresponding to the at least two screen brightness values;
wherein the screen brightness value determination module (203) comprises:
a power consumption difference value calculation sub-module, configured to select the at least two screen brightness values in the target screen brightness range, acquire power consumption values corresponding to the at least two selected screen brightness values, and calculate power consumption difference values between the power consumption values corresponding to every two adjacent screen brightness values;
a first list establishment sub-module, configured to establish and store a first list according to the at least two screen brightness values in the target screen brightness range and the corresponding power consumption difference values; and
a determination sub-module, configured to select a screen brightness value corresponding to a minimum power consumption difference value from the first list, and display according to the selected screen brightness value.

5. An apparatus for adjusting screen brightness, comprising:
an acquisition module (201) configured to acquire a current battery power value and a current screen brightness value of a terminal;
a screen brightness range selection module (202) configured to select a target screen brightness range suitable for the acquired current battery power value by taking the current screen brightness value as a baseline; and
a screen brightness value determination module(203) configured to select a screen brightness value corresponding to the current battery power value according to power consumption values corresponding to at least two selected screen brightness values in the target screen brightness range, and display according to the selected screen brightness value;
**characterized in that**, further comprising:
a screen brightness value and power consumption value acquisition module (204) configured to acquire a minimum screen brightness value and a maximum screen brightness value of the terminal, select the at least two screen brightness values at equal intervals incrementally or degressively in a range from the acquired minimum screen brightness value to the acquired maximum screen brightness value of the terminal, and calculate power consumption values corresponding to the at least two screen brightness values;
wherein the screen brightness value determination module (203) further comprises:
a first curve graph establishment sub-module, configured to select the at least two screen brightness values in the target screen range, acquire power consumption values corresponding to the at least two selected screen brightness values, and establish a first curve graph;
a conversion sub-module, configured to convert the established first curve graph into at least two function straight lines; and
a determination sub-module, configured to find a straight line with a minimum slope, select a screen brightness value with the smallest difference from the current screen brightness value on the straight line with the minimum slope, and display according to the selected screen brightness value.

6. The apparatus of claim 4, wherein the screen brightness range selection module (202) is further configured to select a brightness range higher than the current screen brightness value as the target screen brightness range when the acquired current battery power value is not lower than a set threshold value, and select a brightness range lower than the current screen brightness value as the target screen brightness range when the acquired current battery power value is lower than the set threshold value.

7. A computer storage medium having computer executable instructions stored therein, wherein the computer executable instructions are configured to execute the method for adjusting screen brightness according to any one of claims 1 to 3.

## Patentansprüche

1. Verfahren zum Justieren einer Bildschirmhelligkeit, umfassend:
Erfassen (S101) eines aktuellen Batterieleistungswertes und eines aktuellen Bildschirmhelligkeitswertes eines Endgerätes,
Auswählen (S102) eines Ziel-Bildschirmhelligkeitsbereichs, der für den erfassten aktuellen Batterieleistungswert geeignet ist, indem der aktuelle Bildschirmhelligkeitswert als Basis genommen wird, und
Auswählen (S103) eines Bildschirmhelligkeitswertes, der dem aktuellen Batterieleistungswert entspricht, gemäß Leistungsverbrauchswerten, die mindestens zwei ausgewählten Bildschirmhelligkeitswerten in dem Ziel-Bildschirmhelligkeitsbereich entsprechen, und Anzeigen gemäß dem ausgewählten Bildschirmhelligkeitswert,
**dadurch gekennzeichnet, dass** es ferner umfasst:
Erfassen eines minimalen Bildschirmhelligkeitswertes und eines maximalen Bildschirmhelligkeitswertes des Endgerätes und
Auswählen der mindestens zwei Bildschirmhelligkeitswerte in gleichen Intervallen aufsteigend oder absteigend in einem Bereich von dem erfassten minimalen Bildschirmhelligkeitswert bis zu dem erfassten maximalen Bildschirmhelligkeitswert des Endgerätes und Berechnen von Leistungsverbrauchswerten, die jeweils den mindestens zwei Bildschirmhelligkeitswerten entsprechen,
wobei der Schritt des Auswählens des Bildschirmhelligkeitswertes, der dem aktuellen Batterieleistungswert entspricht, gemäß den Leistungsverbrauchswerten, die den mindestens zwei ausgewählten Bildschirmhelligkeitswerten in dem Ziel-Bildschirmhelligkeitsbereich entsprechen, und das Anzeigen gemäß dem ausgewählten Bildschirmhelligkeitswert umfasst:
Erfassen von Batterieleistungswerten, die den mindestens zwei Bildschirmhelligkeitswerten entsprechen, die in dem Ziel-Bildschirmhelligkeitsbereich ausgewählt werden, und Berechnen der Leistungsverbrauch-Differenzwerte zwischen den Leistungsverbrauchswerten, die jeweils zwei benachbarten Bildschirmhelligkeitswerten entsprechen,
Erstellen einer ersten Liste gemäß den mindestens zwei Bildschirmhelligkeitswerten in dem Ziel-Bildschirmhelligkeitsbereich und den entsprechenden Leistungsverbrauch-Differenzwerten und
Auswählen eines Bildschirmhelligkeitswertes, der einem minimalen Leistungsverbrauch-Differenzwert aus der Liste entspricht, und Anzeigen gemäß dem ausgewählten Bildschirmhelligkeitswert.

2. Verfahren zum Justieren einer Bildschirmhelligkeit, umfassend:
Erfassen (S101) eines aktuellen Batterieleistungswertes und eines aktuellen Bildschirmhelligkeitswertes eines Endgerätes,
Auswählen (S102) eines Ziel-Bildschirmhelligkeitsbereichs, der für den erfassten Batterieleistungswert geeignet ist, indem der aktuelle Bildschirmhelligkeitswert als Basis genommen wird, und
Auswählen (S103) eines Bildschirmhelligkeitswertes, der dem aktuellen Batterieleistungswert entspricht, gemäß Leistungsverbrauchswerten, die mindestens zwei ausgewählten Bildschirmhelligkeitswerten in dem Ziel-Bildschirmhelligkeitsbereich entsprechen, und Anzeigen gemäß dem ausgewählten Bildschirmhelligkeitswert,
**dadurch gekennzeichnet, dass** es ferner umfasst:
Erfassen eines minimalen Bildschirmhelligkeitswertes und eines maximalen Bildschirmhelligkeitswertes des Endgerätes und
Auswählen der mindestens zwei Bildschirmhelligkeitswerte in gleichen Intervallen aufsteigend oder absteigend in einem Bereich von dem erfassten minimalen Bildschirmhelligkeitswert bis zu dem erfassten maximalen Bildschirmhelligkeitswert des Endgerätes und Berechnen von Leistungsverbrauchswerten, die jeweils den mindestens zwei Bildschirmhelligkeitswerten entsprechen,
wobei der Schritt des Auswählens des Bildschirmhelligkeitswertes, der dem aktuellen Batterieleistungswert entspricht, gemäß den Leistungsverbrauchswerten, die den mindestens zwei ausgewählten Bildschirmhelligkeitswerten in dem Ziel-Bildschirmhelligkeitsbereich entsprechen, und das Anzeigen gemäß dem ausgewählten Bildschirmhelligkeitswert umfasst:
Erstellen eines ersten Kurvendiagramms gemäß den ausgewählten Bildschirmhelligkeitswerten und den Leistungsverbrauchswerten, die den Bildschirmhelligkeitswerten entsprechen,
Umwandeln des erstellten ersten Kurvendiagramms in mindestens zwei Funktionsgeraden und
Finden einer Geraden mit einer minimalen Steigung, Auswählen eines Bildschirmhelligkeitswertes mit der kleinsten Differenz zu dem aktuellen Bildschirmhelligkeitswert auf der Geraden mit der minimalen Steigung und Anzeigen gemäß dem ausgewählten Bildschirmhelligkeitswert.

3. Verfahren nach Anspruch 1, wobei der Schritt des Auswählens des Ziel-Bildschirmhelligkeitsbereiches, der für den erfassten aktuellen Batterieleistungswert geeignet ist, indem der aktuelle Bildschirmhelligkeitswert als Basis genommen wird, umfasst:
Auswählen eines Helligkeitsbereiches, der höher als der aktuelle Bildschirmhelligkeitswert ist, als Ziel-Bildschirmhelligkeitsbereich, wenn der erfasste aktuelle Batterieleistungswert nicht niedriger als ein eingestellter Schwellenwert ist, und
Auswählen eines Helligkeitsbereiches, der niedriger als der aktuelle Bildschirmhelligkeitswert ist, als Ziel-Bildschirmhelligkeitsbereich, wenn der erfasste aktuelle Batterieleistungswert niedriger als der eingestellte Schwellen wert ist.

4. Vorrichtung zum Justieren einer Bildschirmhelligkeit, umfassend:
ein Erfassungsmodul (201), das dafür konfiguriert ist, einen aktuellen Batterieleistungswert und einen aktuellen Bildschirmhelligkeitswert eines Endgerätes zu erfassen,
ein Bildschirmhelligkeitsbereich-Auswahlmodul (202), das dafür konfiguriert ist, einen Ziel-Bildschirmhelligkeitsbereich auszuwählen, der für den erfassten aktuellen Batterieleistungswert geeignet ist, indem der aktuelle Bildschirmhelligkeitswert als Basis genommen wird, und
ein Bildschirmhelligkeitswert-Bestimmungsmodul (203), das dafür konfiguriert ist, einen Bildschirmhelligkeitswert auszuwählen, der dem aktuellen Batterieleistungswert entspricht, gemäß Leistungsverbrauchswerten, die mindestens zwei ausgewählten Bildschirmhelligkeitswerten in dem Ziel-Bildschirmhelligkeitsbereich entsprechen, und das Anzeigen gemäß dem ausgewählten Bildschirmhelligkeitswert auszuführen,
**dadurch gekennzeichnet, dass** sie ferner umfasst:
ein Bildschirmhelligkeitswert- und Batterieleistungswert-Erfassungsmodul (204), das dafür konfiguriert ist, einen minimalen Bildschirmhelligkeitswert und einen maximalen Bildschirmhelligkeitswert des Endgerätes zu erfassen, die mindestens zwei Bildschirmhelligkeitswerte in gleichen Intervallen aufsteigend oder absteigend in einem Bereich von dem erfassten minimalen Bildschirmhelligkeitswert bis zu dem erfassten maximalen Bildschirmhelligkeitswert des Endgerätes auszuwählen und Leistungsverbrauchswerte, die jeweils den mindestens zwei Bildschirmhelligkeitswerten entsprechen, zu berechnen,
wobei das Bildschirmhelligkeitswert-Bestimmungsmodul (203) umfasst:
ein Leistungsverbrauch-Differenzwertberechnungs-Teilmodul, das dafür konfiguriert ist, die mindestens zwei Bildschirmhelligkeitswerte in dem Ziel-Bildschirmhelligkeitsbereich auszuwählen, Leistungsverbrauchswerte, die den mindestens zwei Bildschirmhelligkeitswerten entsprechen, zu erfassen und Leistungsverbrauch-Differenzwerte zwischen den Leistungsverbrauchswerten, die jeweils zwei benachbarten Bildschirmhelligkeitswerten entsprechen, zu berechnen,
ein Teilmodul zur Erstellung einer ersten Liste, das dafür konfiguriert ist, eine erste Liste gemäß den mindestens zwei Bildschirmhelligkeitswerten in dem Ziel-Bildschirmhelligkeitsbereich und den entsprechenden Leistungsverbrauch-Differenzwerten zu erstellen und zu speichern, und
ein Bestimmungs-Teilmodul, das dafür konfiguriert ist, einen Bildschirmhelligkeitswert, der einem minimalen Leistungsverbrauch-Differenzwert entspricht, aus der ersten Liste auszuwählen und die Anzeige gemäß dem ausgewählten Bildschirmhelligkeitswert auszuführen.

5. Vorrichtung zum Justieren einer Bildschirmhelligkeit, umfassend:
ein Erfassungsmodul (201), das dafür konfiguriert ist, einen aktuellen Batterieleistungswert und einen aktuellen Bildschirmhelligkeitswert eines Endgerätes zu erfassen,
ein Bildschirmhelligkeitsbereich-Auswahlmodul (202), das dafür konfiguriert ist, einen Ziel-Bildschirmhelligkeitsbereich auszuwählen, der für den erfassten aktuellen Batterieleistungswert geeignet ist, indem der aktuelle Bildschirmhelligkeitswert als Basis genommen wird, und
ein Bildschirmhelligkeitswert-Bestimmungsmodul (203), das dafür konfiguriert ist, einen Bildschirmhelligkeitswert auszuwählen, der dem aktuellen Batterieleistungswert entspricht, gemäß Leistungsverbrauchswerten, die mindestens zwei ausgewählten Bildschirmhelligkeitswerten in dem Ziel-Bildschirmhelligkeitsbereich entsprechen, und die Anzeige gemäß dem ausgewählten Bildschirmhelligkeitswert auszuführen,
**dadurch gekennzeichnet, dass** sie ferner umfasst:
ein Bildschirmhelligkeitswert- und Batterieleistungswert-Erfassungsmodul (204), das dafür konfiguriert ist, einen minimalen Bildschirmhelligkeitswert und einen maximalen Bildschirmhelligkeitswert des Endgerätes zu erfassen, die mindestens zwei Bildschirmhelligkeitswerte in gleichen Intervallen aufsteigend oder absteigend in einem Bereich von dem erfassten minimalen Bildschirmhelligkeitswert bis zu dem erfassten maximalen Bildschirmhelligkeitswert des Endgerätes auszuwählen und Leistungsverbrauchswerte, die jeweils den mindestens zwei Bildschirmhelligkeitswerten entsprechen, zu berechnen,
wobei das Bildschirmhelligkeitswert-Bestimmungsmodul (203) ferner umfasst:
ein Teilmodul zur Erstellung des ersten Kurvendiagramms, das dafür konfiguriert ist, die mindestens zwei Bildschirmhelligkeitswerte in dem Ziel-Bildschirmhelligkeitsbereich auszuwählen, Leistungsverbrauchswerte, die den mindestens zwei ausgewählten Bildschirmhelligkeitswerten entsprechen, zu erfassen und ein erstes Kurvendiagramm zu erstellen,
ein Umwandlungs-Teilmodul, das dafür konfiguriert ist, das erstellte erste Kurvendiagramm in mindestens zwei Funktionsgeraden umzuwandeln, und
ein Bestimmungs-Teilmodul, das dafür konfiguriert ist, eine Gerade mit einer minimalen Steigung zu finden, einen Bildschirmhelligkeitswert mit der kleinsten Differenz zu dem aktuellen Bildschirmhelligkeitswert auf der Geraden mit der minimalen Steigung auszuwählen und die Anzeige gemäß dem ausgewählten Bildschirmhelligkeitswert auszuführen.

6. Vorrichtung nach Anspruch 4, wobei das Bildschirmhelligkeitsbereich-Auswahlmodul (202) ferner dafür konfiguriert ist, einen Helligkeitsbereich als Ziel-Bildschirmhelligkeitsbereich auszuwählen, der höher als der aktuelle Bildschirmhelligkeitswert ist, wenn der erfasste aktuelle Batterieleistungswert nicht niedriger als ein eingestellter Schwellenwert ist, und einen Helligkeitsbereich als Ziel-Bildschirmhelligkeitsbereich auszuwählen, der niedriger als der aktuelle Bildschirmhelligkeitswert ist, wenn der erfasste aktuelle Batterieleistungswert niedriger als der eingestellte Schwellen wert ist.

7. Computerspeichermedium mit darauf gespeicherten, von einem Computer ausführbaren Anweisungen, wobei die von einem Computer ausführbaren Anweisungen dafür konfiguriert sind, das Verfahren zum Justieren einer Bildschirmhelligkeit nach einem der Ansprüche 1 bis 3 auszuführen.

## Revendications

1. Procédé d'ajustement d'une luminosité d'écran, comprenant les étapes ci-dessous consistant à :
acquérir (S101) une valeur de puissance de batterie en cours et une valeur de luminosité d'écran en cours d'un terminal ;
sélectionner (S102) une plage de luminosité d'écran cible pertinente pour la valeur de puissance de batterie en cours acquise, en prenant la valeur de luminosité d'écran en cours comme référence ; et
sélectionner (S103) une valeur de luminosité d'écran correspondant à la valeur de puissance de batterie en cours selon des valeurs de consommation d'énergie correspondant à au moins deux valeurs de luminosité d'écran sélectionnées dans la plage de luminosité d'écran cible, et afficher selon la valeur de luminosité d'écran sélectionnée ;
**caractérisé en ce qu'**il comprend en outre les étapes ci-dessous consistant à :
acquérir une valeur de luminosité d'écran minimale et une valeur de luminosité d'écran maximale du terminal ; et
sélectionner lesdites au moins deux valeurs de luminosité d'écran à intervalles égaux, de façon incrémentale ou dégressive, dans une plage allant de la valeur de luminosité d'écran minimale acquise à la valeur de luminosité d'écran maximale acquise du terminal, et calculer des valeurs de consommation d'énergie correspondant auxdites au moins deux valeurs de luminosité d'écran, respectivement ;
dans lequel l'étape consistant à sélectionner la valeur de luminosité d'écran correspondant à la valeur de puissance de batterie en cours selon les valeurs de consommation d'énergie correspondant auxdites au moins deux valeurs de luminosité d'écran sélectionnées dans la plage de luminosité d'écran cible, et à afficher selon la valeur de luminosité d'écran sélectionnée, comprend les étapes ci-dessous consistant à :
acquérir des valeurs de consommation d'énergie correspondant auxdites au moins deux valeurs de luminosité d'écran sélectionnées dans la plage de luminosité d'écran cible, et calculer des valeurs de différence de consommation d'énergie entre les valeurs de consommation d'énergie correspondant à chaque paire des deux valeurs de luminosité d'écran adjacentes ;
établir une première liste selon lesdites au moins deux valeurs de luminosité d'écran dans la plage de luminosité d'écran cible et les valeurs de différence de consommation d'énergie correspondantes ; et
sélectionner, à partir de la première liste, une valeur de luminosité d'écran correspondant à une valeur de différence de consommation d'énergie minimale, et afficher selon la valeur de luminosité d'écran sélectionnée.

2. Procédé d'ajustement d'une luminosité d'écran, comprenant les étapes ci-dessous consistant à :
acquérir (S101) une valeur de puissance de batterie en cours et une valeur de luminosité d'écran en cours d'un terminal ;
sélectionner (S102) une plage de luminosité d'écran cible pertinente pour la valeur de puissance de batterie en cours acquise, en prenant la valeur de luminosité d'écran en cours comme référence ; et
sélectionner (S103) une valeur de luminosité d'écran correspondant à la valeur de puissance de batterie en cours selon des valeurs de consommation d'énergie correspondant à au moins deux valeurs de luminosité d'écran sélectionnées dans la plage de luminosité d'écran cible, et afficher selon la valeur de luminosité d'écran sélectionnée ;
**caractérisé en ce qu'**il comprend en outre les étapes ci-dessous consistant à :
acquérir une valeur de luminosité d'écran minimale et une valeur de luminosité d'écran maximale du terminal ; et
sélectionner lesdites au moins deux valeurs de luminosité d'écran à intervalles égaux, de façon incrémentale ou dégressive, dans une plage allant de la valeur de luminosité d'écran minimale acquise à la valeur de luminosité d'écran maximale acquise du terminal, et calculer des valeurs de consommation d'énergie correspondant auxdites au moins deux valeurs de luminosité d'écran, respectivement ;
dans lequel l'étape consistant à sélectionner la valeur de luminosité d'écran correspondant à la valeur de puissance de batterie en cours selon les valeurs de consommation d'énergie correspondant auxdites au moins deux valeurs de luminosité d'écran sélectionnées dans la plage de luminosité d'écran cible, et à afficher selon la valeur de luminosité d'écran sélectionnée, comprend les étapes ci-dessous consistant à :
établir un premier graphique en courbes selon les valeurs de luminosité d'écran sélectionnées et les valeurs de consommation d'énergie correspondant aux valeurs de luminosité d'écran ;
convertir le premier graphique en courbes établi en au moins deux lignes droites de fonction ; et
trouver une ligne droite avec une pente minimale, sélectionner une valeur de luminosité d'écran présentant la plus petite différence par rapport à la valeur de luminosité d'écran en cours sur la ligne droite avec la pente minimale, et afficher selon la valeur de luminosité d'écran sélectionnée.

3. Procédé selon la revendication 1, dans lequel l'étape consistant à sélectionner la plage de luminosité d'écran cible pertinente pour la valeur de puissance de batterie en cours acquise, en prenant la valeur de luminosité d'écran en cours comme référence, comprend les étapes ci-dessous consistant à :
sélectionner une plage de luminosité supérieure à la valeur de luminosité d'écran en cours comme plage de luminosité d'écran cible lorsque la valeur de puissance de batterie en cours acquise n'est pas inférieure à une valeur de seuil définie ; et
sélectionner une plage de luminosité inférieure à la valeur de luminosité d'écran en cours comme plage de luminosité d'écran cible lorsque la valeur de puissance de batterie en cours acquise est inférieure à la valeur de seuil définie.

4. Appareil destiné à ajuster une luminosité d'écran, comprenant :
un module d'acquisition (201) configuré de manière à acquérir une valeur de puissance de batterie en cours et une valeur de luminosité d'écran en cours d'un terminal ;
un module de sélection de plage de luminosité d'écran (202) configuré de manière à sélectionner une plage de luminosité d'écran cible pertinente pour la valeur de puissance de batterie en cours acquise, en prenant la valeur de luminosité d'écran en cours comme référence ; et
un module de détermination de valeur de luminosité d'écran (203) configuré de manière à sélectionner une valeur de luminosité d'écran correspondant à la valeur de puissance de batterie en cours selon des valeurs de consommation d'énergie correspondant à au moins deux valeurs de luminosité d'écran sélectionnées dans la plage de luminosité d'écran cible, et à afficher selon la valeur de luminosité d'écran sélectionnée ;
**caractérisé en ce qu'**il comprend en outre :
un module d'acquisition de valeur de luminosité d'écran et de valeur de consommation d'énergie (204) configuré de manière à acquérir une valeur de luminosité d'écran minimale et une valeur de luminosité d'écran maximale du terminal, à sélectionner lesdites au moins deux valeurs de luminosité d'écran à intervalles égaux, de manière incrémentale ou dégressive, dans une plage allant de la valeur de luminosité d'écran minimale acquise à la valeur de luminosité d'écran maximale acquise du terminal, et à calculer des valeurs de consommation d'énergie correspondant auxdites au moins deux valeurs de luminosité d'écran ;
dans lequel le module de détermination de valeur de luminosité d'écran (203) comprend :
un sous-module de calcul de valeurs de différence de consommation d'énergie, configuré de manière à sélectionner lesdites au moins deux valeurs de luminosité d'écran dans la plage de luminosité d'écran cible, à acquérir des valeurs de consommation d'énergie correspondant auxdites au moins deux valeurs de luminosité d'écran sélectionnées, et à calculer des valeurs de différence de consommation d'énergie entre les valeurs de consommation d'énergie correspondant à chaque paire des deux valeurs de luminosité d'écran adjacentes ;
un premier sous-module d'établissement de liste, configuré de manière à établir et à stocker une première liste selon lesdites au moins deux valeurs de luminosité d'écran dans la plage de luminosité d'écran cible et les valeurs de différence de consommation d'énergie correspondantes ; et
un sous-module de détermination, configuré de manière à sélectionner, à partir de la première liste, une valeur de luminosité d'écran correspondant à une valeur de différence de consommation d'énergie minimale, et à afficher selon la valeur de luminosité d'écran sélectionnée.

5. Appareil destiné à ajuster une luminosité d'écran, comprenant :
un module d'acquisition (201) configuré de manière à acquérir une valeur de puissance de batterie en cours et une valeur de luminosité d'écran en cours d'un terminal ;
un module de sélection de plage de luminosité d'écran (202) configuré de manière à sélectionner une plage de luminosité d'écran cible pertinente pour la valeur de puissance de batterie en cours acquise, en prenant la valeur de luminosité d'écran en cours comme référence ; et
un module de détermination de valeur de luminosité d'écran (203) configuré de manière à sélectionner une valeur de luminosité d'écran correspondant à la valeur de puissance de batterie en cours selon des valeurs de consommation d'énergie correspondant à au moins deux valeurs de luminosité d'écran sélectionnées dans la plage de luminosité d'écran cible, et à afficher selon la valeur de luminosité d'écran sélectionnée ;
**caractérisé en ce qu'**il comprend en outre :
un module d'acquisition de valeur de luminosité d'écran et de valeur de consommation d'énergie (204) configuré de manière à acquérir une valeur de luminosité d'écran minimale et une valeur de luminosité d'écran maximale du terminal, à sélectionner lesdites au moins deux valeurs de luminosité d'écran à intervalles égaux, de manière incrémentale ou dégressive, dans une plage allant de la valeur de luminosité d'écran minimale acquise à la valeur de luminosité d'écran maximale acquise du terminal, et à calculer des valeurs de consommation d'énergie correspondant auxdites au moins deux valeurs de luminosité d'écran ;
dans lequel le module de détermination de valeur de luminosité d'écran (203) comprend en outre :
un premier sous-module d'établissement de graphique en courbes, configuré de manière à sélectionner lesdites au moins deux valeurs de luminosité d'écran dans la plage de luminosité d'écran cible, à acquérir des valeurs de consommation d'énergie correspondant auxdites au moins deux valeurs de luminosité d'écran sélectionnées, et à établir un premier graphique en courbes ;
un sous-module de conversion, configuré de manière à convertir le premier graphique en courbes établi en au moins deux lignes droites de fonction ; et
un sous-module de détermination, configuré de manière à trouver une ligne droite avec une pente minimale, à sélectionner une valeur de luminosité d'écran présentant la plus petite différence par rapport à la valeur de luminosité d'écran en cours sur la ligne droite avec la pente minimale, et à afficher selon la valeur de luminosité d'écran sélectionnée.

6. Appareil selon la revendication 4, dans lequel le module de sélection de plage de luminosité d'écran (202) est en outre configuré de manière à sélectionner une plage de luminosité supérieure à la valeur de luminosité d'écran en cours, en tant que la plage de luminosité d'écran cible, lorsque la valeur de puissance de batterie en cours acquise n'est pas inférieure à une valeur de seuil définie, et à sélectionner une plage de luminosité inférieure à la valeur de luminosité d'écran en cours, en tant que la plage de luminosité d'écran cible, lorsque la valeur de puissance de batterie en cours acquise est inférieure à la valeur de seuil définie.

7. Support de stockage informatique dans lequel sont stockées des instructions exécutables par ordinateur, dans lequel les instructions exécutables par ordinateur sont configurées de manière à exécuter le procédé d'ajustement de luminosité d'écran selon l'une quelconque des revendications 1 à 3.
